# EUROPEAN PATENT APPLICATION

(11) **EP 4 087 258 A1**
(43) Date of publication of application: **09.11.2022**
(21) Application number: 21812114.3
(22) Date of filing: 25.05.2021
(51) Int. Cl.: H04N 21/2187

(54) **METHOD AND APPARATUS FOR DISPLAYING LIVE BROADCAST DATA, AND DEVICE AND STORAGE MEDIUM**

(30) Priority: 27.05.2020 CN 202010462711
(71) Applicant: BEIJING BYTEDANCE NETWORK TECHNOLOGY CO., LTD., Beijing 100041 (CN)
(72) Inventor: SUN, Han, Beijing 100190 (CN); HUA, Yanting, Beijing 100190 (CN); SHI, Xiaolei, Beijing 100190 (CN); JI, Pengfei, Beijing 100190 (CN); WANG, Yuchen, Beijing 100190 (CN)
(74) Representative: Dentons UK and Middle East LLP
(86) International application number: PCT/CN2021/095799
(87) International publication number: WO 2021/238913

(57) **Abstract**

Provided are a method and apparatus for displaying live broadcast data, and a device and a storage medium. The method comprises: in response to a display request for a resource, acquiring a live broadcast room identifier corresponding to the resource; determining a first live broadcast state of a live broadcast room corresponding to the live broadcast room identifier; and if the first live broadcast state indicates an on-going live broadcast, displaying, on a display interface for the resource, live broadcast data of the live broadcast room. According to the present disclosure, live broadcast data of a live broadcast room is displayed on a display interface for a resource, such that during the process of browsing the resource, when a user does not enter the live broadcast room, the user can know live broadcast related information of the live broadcast room in advance, and furthermore, the user can determine, on the basis of the known live broadcast related information, whether the user needs to enter the live broadcast room, thereby preventing the problem of a poor user experience caused by a user entering a live broadcast room which the user is not interested in when the user does not know live broadcast related information.

## Description

For all purposes, the present application claims priority to the Chinese patent application No. 202010462711.6, filed on May 27, 2020, the entire disclosure of which is incorporated herein by reference as part of the present application.

### TECHNICAL FIELD

The present disclosure relates to a method for displaying live broadcast data, an apparatus, a device and a storage medium.

### BACKGROUND

With the continuous penetration of live broadcast, the form of live broadcast is gradually trying to combine with various resources. Taking a video advertisement as an example, when a user watches a video advertisement, if the product in the video advertisement is being broadcast live, the user may enter the live broadcast room through the live broadcast portal in the video advertisement to watch the live broadcast.

### SUMMARY

At least one embodiment of the present disclosure provides a method for displaying live broadcast data, and the method comprises:
in response to a display request for a resource, obtaining a live broadcast room identifier corresponding to the resource;
determining a first live broadcast state of a live broadcast room corresponding to the live broadcast room identifier; and
in the case where the first live broadcast state is being broadcast live, displaying the live broadcast data of the live broadcast room on a display interface of the resource.

In an alternative embodiment, displaying the live broadcast data of the live broadcast room on the display interface of the resource comprises:
displaying the live broadcast data of the live broadcast room by using a preset live broadcast component on the display interface of the resource, where the preset live broadcast component is used to trigger entering into the live broadcast room.

In an alternative embodiment, the live broadcast data comprises at least one selected from a group consisting of an amount of live broadcast viewers, an amount of live broadcast comments, and an amount of live broadcast gifts; and displaying the live broadcast data of the live broadcast room comprises:
dynamically displaying, in an incremental way, at least one selected from the group consisting of the amount of the live broadcast viewers, the amount of the live broadcast comments, and the amount of the live broadcast gifts in a preset period.

In an alternative embodiment, displaying the live broadcast data of the live broadcast room comprises:
in the case where at least one piece of the live broadcast data selected from the group consisting of the amount of the live broadcast viewers, the amount of the live broadcast comments, and the amount of the live broadcast gifts reaches a corresponding preset amount, displaying the at least one piece of the live broadcast data.

In an alternative embodiment, the method further comprises:
in the case where the first live broadcast state is being broadcast live, displaying a button for entering the live broadcast room on the display interface of the resource, where the button for entering the live broadcast room is used to indicate and trigger entering the live broadcast room.

In an alternative embodiment, after displaying the live broadcast data of the live broadcast room on the display interface of the resource, the method further comprises:
obtaining a second live broadcast state of the live broadcast room corresponding to the resource in response to a live broadcast room state updating request for the resource; and
updating the display interface of the resource based on the second live broadcast state.

In an alternative embodiment, obtaining the second live broadcast state of the live broadcast room corresponding to the resource in response to the live broadcast room state updating request for the resource comprises:
in response to a trigger operation for any live broadcast room entrance on the display interface of the resource, obtaining the second live broadcast state of the live broadcast room corresponding to the live broadcast room entrance;
updating the display interface of the resource based on the second live broadcast state comprises:
in the case where the second live broadcast state is live broadcast ending, displaying a mask layer on the display interface of the resource, where the mask layer is used to prompt a user that the live broadcast is ended.

In an alternative embodiment, the method further comprises:
in response to a switching operation for the resource, recording currently displayed live broadcast data on the display interface of the resource; and in the case of receiving a switching back operation for the resource, displaying the live broadcast data of the live broadcast room based on the currently displayed live broadcast data that is recorded.

In an alternative embodiment, the live broadcast room identifier corresponding to the resource comprises at least two live broadcast room identifiers, and displaying the live broadcast data of the live broadcast room on the display interface of the resource comprises:
displaying live broadcast data of live broadcast rooms corresponding to the at least two live broadcast room identifiers on the display interface of the resource, respectively.

At least one embodiment of the present disclosure further provides an apparatus for displaying live broadcast data, and the apparatus comprises:
an obtaining module, configured to obtain a live broadcast room identifier corresponding to a resource in response to a display request for the resource;
a determining module, configured to determine a first live broadcast state of a live broadcast room corresponding to the live broadcast room identifier; and
a display module, configured to display the live broadcast data of the live broadcast room on a display interface of the resource in the case where the first live broadcast state is being broadcast live.

At least one embodiment of the present disclosure further provides a computer-readable storage medium, on which instructions are stored. The instructions, when executed on a terminal device, enable the terminal device to execute the method described above.

At least one embodiment of the present disclosure further provides a device, which comprises a memory, a processor, and a computer program stored on the memory. The processor, when executing the computer program, executes the method described above.

### BRIEF DESCRIPTION OF THE DRAWINGS

The accompanying drawings herein, which are incorporated into the specification and constitute a part of the specification, show embodiments consistent with the disclosure and serve to explain the principles of the present disclosure together with the description.

In order to more clearly illustrate the embodiments of the present disclosure or the technical solutions in the prior art, the following briefly introduces the accompanying drawings that need to be used in the description of the embodiments or the prior art. Obviously, for those of ordinary skill in the art, other drawings may also be obtained from these drawings on the premise of no creative labor.
FIG. 1 is a flowchart of a method for displaying live broadcast data provided by the embodiments of the present disclosure;
FIG. 2 is a schematic diagram of a display interface of a video advertisement provided by the embodiments of the present disclosure;
FIG. 3 is a flowchart of another method for displaying the live broadcast data provided by the embodiments of the present disclosure;
FIG. 4 is a schematic diagram of a display interface of another video advertisement provided by the embodiments of the present disclosure;
FIG. 5 is a schematic structural diagram of an apparatus for displaying live broadcast data provided by the embodiments of the present disclosure; and
FIG. 6 is a schematic structural diagram of a device for displaying live broadcast data provided by the embodiments of the present disclosure.

### DETAILED DESCRIPTION

In order to more clearly understand the above objects, features and advantages of the present disclosure, the solutions of the present disclosure will be further described below. It should be noted that the embodiments of the present disclosure and features in the embodiments may be combined with each other under the condition of no conflict.

Many specific details are set forth in the following description to facilitate a full understanding of the present disclosure, but the present disclosure may also be implemented in other ways different from those described here; obviously, the embodiments in the description are only some but not all of the embodiments of the present disclosure.

The inventor notes that: in the process of watching a video advertisement, if a user does not enter a live broadcast room, the user is not capable of knowing live broadcast related information of the live broadcast room; however, if the user directly enters the live broadcast room without knowing the live broadcast related information of the live broadcast room, there is a high probability that the user is not interested in the entered live broadcast room, thus resulting in a poor user experience.

At present, the display of various resources may be combined with the live broadcast. For example, during a display process of video advertisements, users may enter the live broadcast room to watch the live broadcast through a live broadcast room entrance on a display interface of the video advertisement, so as to realize the combination of a single video advertisement and the live broadcast room, so that the video advertisement can not only provide a display function for the user, but also provide an entrance for the user to enter the live broadcast room corresponding to the video advertisement.

However, the current display interface of the video advertisement does not reflect the information of the live broadcast room, so that users who watch the video advertisements have no expectation of entering the live broadcast room, and they cannot know the live broadcast related information of the live broadcast room without entering the live broadcast room, which may cause a problem of poor user experience due to users entering a live broadcast room that they are not interested in without knowing the live broadcast related information.

The present disclosure provides a method for displaying live broadcast data. When receiving a display request for any resource, a live broadcast room identifier corresponding to the resource is obtained; then a live broadcast state of the live broadcast room corresponding to the live broadcast room identifier is determined; and in the case where the live broadcast state is being broadcast live, the live broadcast data of the live broadcast room is obtained, and finally the live broadcast data is displayed on a display interface of the resource. In the present disclosure, the live broadcast data of the live broadcast room is displayed on the display interface of the resource, so that the user can know the live broadcast related information of the live broadcast room in advance without entering the live broadcast room during browsing the resource, and further the user may judge whether it is needed to enter the live broadcast room based on the learned live broadcast related information, which avoids the problem of poor user experience caused by the user entering a live broadcast room that is not of interest without knowing the live broadcast related information.

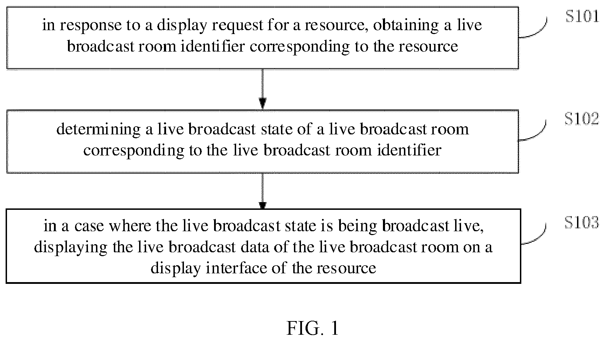

The embodiments of the present disclosure provide a method for displaying live broadcast data, and FIG. 1 is a flowchart of a method for displaying live broadcast data provided by the embodiments of the present disclosure. Referring to FIG. 1, the method for displaying live broadcast data includes steps S101 to S103.

S101: in response to a display request for a resource, obtaining a live broadcast room identifier corresponding to the resource.

The method for displaying live broadcast data provided by the embodiments of the present disclosure may be applied to the client. The resources in the embodiments of the present disclosure may include video resources, audio resources, picture resources, document resources, etc. For example, the video resources may be video advertisements, short videos, etc., and the video advertisements may include screen-opening advertisements, etc. Specifically, the screen-opening advertisements refer to advertisements that are displayed preferentially in the process of opening an application or a webpage.

In an optional implementation mode, when the client receives a display request for any resource, the data corresponding to the resource is loaded locally or from the server, so that the client may display the resource based on the data of the resource. The data corresponding to the resource may include a live broadcast room identifier corresponding to the resource.

The live broadcast room identifier may be a live broadcast room ID. Since one live broadcast room generally corresponds to one host, the live broadcast room identifier in the embodiments of the present disclosure may also be the live broadcast room host ID.

In an application scenario, after the user clicks a video application icon displayed on the interface, a display request for a certain video advertisement is triggered; and in response to the display request for the video advertisement, the client first obtains the live broadcast room identifier corresponding to the video advertisement.

In another application scenario, after the user clicks a play entrance of a video advertisement, a display request for the video advertisement is triggered; and in response to the display request for the video advertisement, the client first obtains the live broadcast room identifier corresponding to the video advertisement.

It should be noted that, the embodiments of the present disclosure do not limit the mode of triggering the display request for the resource.

S102: determining a live broadcast state of the live broadcast room corresponding to the live broadcast room identifier.

In the embodiments of the present disclosure, the live broadcast state of the live broadcast room includes being broadcast live and live broadcast ending. Being broadcast live means that the live broadcast room is in live broadcast, and users are allowed to enter the live broadcast room; live broadcast ending means that the live broadcast room is not in live broadcast, and users are not allowed to enter the live broadcast room.

In an optional implementation mode, after the client obtains the live broadcast room identifier, a live broadcast state request is generated based on the live broadcast room identifier, and the live broadcast state request is sent to the server, so as to request for the live broadcast state of the live broadcast room corresponding to the live broadcast identifier from the server. The server may obtain the live broadcast state of the live broadcast room from the live broadcast server after receiving the live broadcast state request, and the server may return the live broadcast state to the client after receiving the live broadcast state.

In another optional implementation mode, after receiving the live broadcast state request from the client, the server may obtain the live broadcast state of the live broadcast room from the live broadcast server. If the live broadcast state is being broadcast live, the live broadcast server may also send the live broadcast data of the live broadcast room to the server, and the server returns the live broadcast state and live broadcast data to the client after receiving the live broadcast state and live broadcast data from the live broadcast server.

Specifically, the live broadcast data may include an amount of live broadcast viewers, an amount of live broadcast comments, and/or an amount of live broadcast gifts. The amount of live broadcast viewers refers to the current amount of viewers in the corresponding live broadcast room, the amount of live broadcast comments refers to the amount of user comments or the amount of new user comments in the corresponding live broadcast room, and the amount of live broadcast gifts refers to the amount of virtual gifts sent by viewing users to the host in the corresponding live broadcast room.

In practical applications, the live broadcast data is used to reflect the atmosphere of the live broadcast room in the live broadcast, and the embodiments of the present disclosure may not limit the specific data content included in the live broadcast data.

S103: in the case where the live broadcast state is being broadcast live, displaying the live broadcast data of the live broadcast room on a display interface of the resource.

In the embodiments of the present disclosure, when the client determines that the live broadcast state of the live broadcast room is being broadcast live, it displays the live broadcast data of the live broadcast room on the display interface of the resource, so that the user has expectations for entering the live broadcast room based on the displayed live broadcast data and can know the live broadcast related information of the live broadcast room in advance without entering the live broadcast room, and further the user may judge whether it is needed to enter the live broadcast room based on the learned live broadcast related information, which avoids the problem of poor user experience caused by the user entering a live broadcast room that is not of interest without knowing the live broadcast related information.

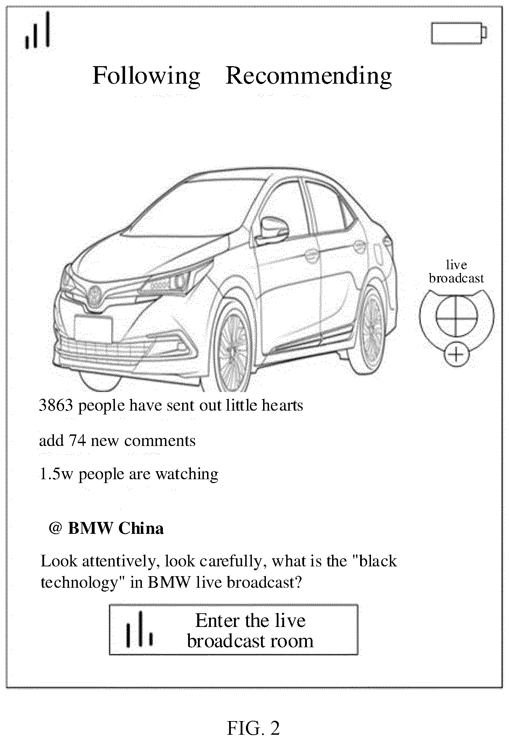

In order to facilitate a more intuitive understanding of the method for displaying live broadcast data provided by the embodiments of the present disclosure, the embodiments of the present disclosure provide a schematic diagram of a display interface of the video advertisement by taking that the resource is a video advertisement as an example, as illustrated in FIG. 2.

Specifically, in FIG. 2, "3863 people have sent out little hearts" is the display effect of the amount of live broadcast gifts in the live broadcast data. While displaying the amount of live broadcast gifts, the animation effect of the virtual gift "little hearts" may also be played synchronously. "Add 74 new comments" is the display effect of the amount of live broadcast comments in the live broadcast data. "1.5w people are watching" is the display effect of the amount of live broadcast viewers in the live broadcast data.

In an optional implementation mode, when displaying the amount of live broadcast viewers, in the case where the number corresponding to the amount of live broadcast viewers exceeds 10,000 and is less than 100 million, the unit of the amount of live broadcast viewers may be set to w, with 1 decimal place; when the number is greater than 100 million, the unit of the amount of live broadcast viewers may be set to 100 million, with 1 decimal place. Through this display process, the displayed amount of live broadcast viewers is more convenient for users to browse. Other live broadcast data may also be processed by using the above-mentioned display processing method, which will not be repeated here.

As illustrated in FIG. 2, by displaying the live broadcast data on the display interface of the video advertisement, the embodiments of the present disclosure may provide the user with the information of the live broadcast room corresponding to the video advertisement, so that the user has expectations to enter the live broadcast room and can know the live broadcast related information without entering the live broadcast room.

In addition, the embodiments of the present disclosure may statically display the live broadcast data in the live broadcast room. In order to further reflect the live broadcast element, the embodiments of the present disclosure may also dynamically display, in an incremental way, the amount of live broadcast viewers, the amount of live broadcast comments, and/or the amount of live broadcast gifts displayed on the display interface of the resource in a preset period.

In an optional embodiment, the client may use a random increase algorithm to update the amount of live broadcast viewers, the amount of live broadcast comments, and/or the amount of live broadcast gifts that are displayed, for example, an increment is performed every 3s, and the data does not change after 10 consecutive dynamic increments. In addition, the client may use the acquired live broadcast data as a basic value, and perform incremental calculation according to preset rules, thereby realizing the dynamic and incremental display of live broadcast data. The basic value may also be set, for example, the basic value is 0, and then incremental calculation is performed according to preset rules to realize dynamic and incremental display of live broadcast data. Through this dynamic and incremental display effect, users may feel the active atmosphere of the live broadcast room, which further facilitates users to judge whether to enter the live broadcast room based on the displayed live broadcast information, thereby reducing the probability of the poor user experience caused by entering the live broadcast room without understanding the live broadcast situation.

In another optional implementation, the purpose of displaying the live broadcast data is to let the user know the live broadcast related information of the live broadcast room in advance before entering the live broadcast room, and determine whether to enter the live broadcast room based on the understanding of the live broadcast related information. In the case where at least one piece of live broadcast data selected from a group consisting of the amount of live broadcast viewers, the amount of live broadcast comments, and the amount of live broadcast gifts reaches a corresponding preset amount, the embodiments of the present disclosure displays the at least one piece of live broadcast data, so that the user may know the live broadcast information of the live broadcast room. Correspondingly, when the amount of live broadcast viewers, the amount of live broadcast comments, or the amount of live broadcast gifts does not reach the corresponding preset amount, it will not be displayed. For example, when the amount of live broadcast gifts does not reach 100, the amount of live broadcast gifts may not be displayed, but only the amount of live broadcast viewers and the amount of live broadcast comments that reach the corresponding preset amount may be displayed, so as to provide users with valuable live broadcast data, which is beneficial for users to determine whether it is needed to enter the live broadcast room.

In practical applications, the display interface of the resource is provided with a live broadcast room entrance, and through the live broadcast room entrance, the users are capable of entering the live broadcast room to watch the live broadcast.

In an optional implementation mode, the live broadcast data of the live broadcast room may be displayed by using a preset live broadcast component on the display interface of the resource. The preset live broadcast component is used to trigger entering into the live broadcast room. As illustrated in FIG. 2, the preset live broadcast component used for displaying live broadcast data may also be used as the entrance of the live broadcast room to trigger entering into the live broadcast room. For example, the user may enter the live broadcast room by clicking on "3863 people have sent little hearts" displayed in FIG. 2.

The embodiments of the present disclosure make it more convenient for users to enter the live broadcast room through the display interface of the resource by giving the preset live component for displaying live broadcast data the function of the live broadcast room entrance.

In another optional implementation mode, in the case where it is determined that the live broadcast state of the live broadcast room corresponding to the resource is being broadcast live, a button for entering the live broadcast room may be displayed on the display interface of the resource, the button for entering the live broadcast room is used to indicate and trigger entering the live broadcast room.

As illustrated in FIG. 2, a radio audio animation effect may also be displayed on the button for entering the live broadcast room, so as to attract users to click the button to enter the live broadcast room. Specifically, the content displayed on the button for entering the live broadcast room may be "enter the live broadcast room" in FIG. 2, or any content delivered by the server or set by the client, as long as the user can be instructed to enter the live broadcast room.

In another optional implementation mode, in the case where it is determined that the live broadcast state of the live broadcast room corresponding to the resource is being broadcast live, an avatar corresponding to the resource is displayed in a preset breathing light style. The preset breathing light style is used to prompt that the live broadcast state of the live broadcast room is being broadcast live.

As illustrated in FIG. 2, the avatar corresponding to the video advertisement is displayed in the breathing light style, and the word "Live" may also be illustrated on the avatar to prompt and attract users to click on the avatar to enter the live broadcast room. In addition, the color of the avatar on the display interface of the video advertisement and the display color of the above-mentioned button for entering the live broadcast room may be the same, as illustrated in FIG. 2, and both are red.

In another optional implementation mode, in the case where it is determined that the live broadcast state of the live broadcast room corresponding to the resource is being broadcast live, the description information, the comment section, the personal homepage preset area, the mask layer or the avatar corresponding to the resource are all set as the entrance of the live broadcast room corresponding to the resource. Specifically, the client enters the live broadcast room in response to a trigger operation on the description information, the comment section, the personal homepage preset area, the mask layer or the avatar corresponding to the resource.

As illustrated in FIG. 2, users may enter the live broadcast room by clicking on the description information "Look attentively, look carefully, what is the 'black technology' in BMW live broadcast?" displayed on the display interface of the video advertisement. In addition, users may enter the comment section by clicking the third-to-last icon on the far right of the display interface of the video advertisement, i.e., the comment section icon, and can enter the live broadcast room by clicking on the bottom or top of the comment section. In addition, after entering the personal homepage of the video advertisement, the user may also click on the preset area of the personal homepage, such as the upper part of the personal homepage, so as to enter the live broadcast room. The embodiments of the present disclosure do not limit other ways of triggering entering the live broadcast room on the display interface of the video advertisement.

In the embodiments of the present disclosure, by adding elements related to the live broadcast room on the display interface of the resource, the live broadcast state of the live broadcast room is intuitively reflected, clear expectations and guidance are given to users to attract users to enter the live broadcast room, thereby increasing the amount of people entering the live broadcast room through the display interface of the resource.

In order to display the information of the live broadcast room more realistically and improve the user experience, during the display process of the resource, the update of the live broadcast state of the live broadcast room corresponding to the resource may also be triggered; and based on the updated live broadcast state, the display interface of the resource is updated.

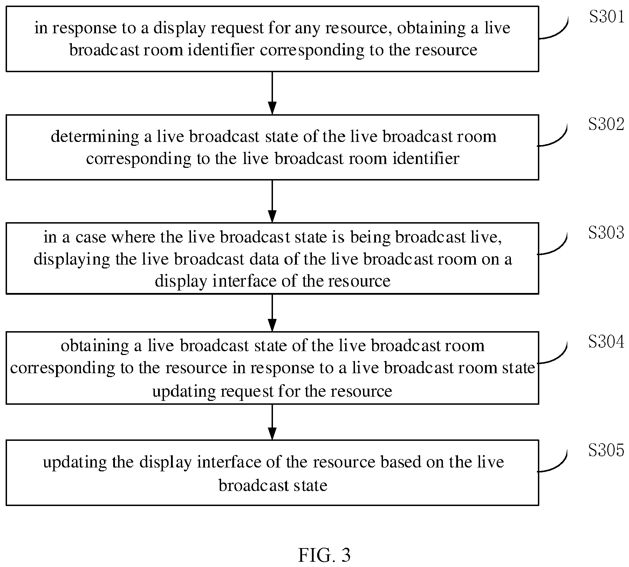

FIG. 3 is a flowchart of another method for displaying the live broadcast data provided by the embodiments of the present disclosure. Referring to FIG. 3, the method for displaying the live broadcast data includes the following steps S301 to S305.
S301: in response to a display request for any resource, obtaining a live broadcast room identifier corresponding to the resource.
S302: determining a live broadcast state of the live broadcast room corresponding to the live broadcast room identifier.
S303: in the case where the live broadcast state is being broadcast live, displaying the live broadcast data of the live broadcast room on a display interface of the resource.

Steps S301-S303 in this embodiment may be understood with reference to steps S101-S103 in the foregoing embodiments, and details are not repeated here.

S304: obtaining a live broadcast state of the live broadcast room corresponding to the resource in response to a live broadcast room state updating request for the resource.

In the embodiments of the present disclosure, since the live broadcast state of the live broadcast room changes, in order to display the state of the live broadcast room more realistically on the display interface of the resource, when receiving the live broadcast room state updating request for the resource, the embodiment of the present disclosure may obtain the live broadcast state of the live broadcast room corresponding to the resource, so as to update the currently displayed live broadcast state.

In practical applications, when receiving the live broadcast room state updating request for the resource, the client sends the live broadcast room state updating request to the server, so that the server may obtain the live broadcast state of the corresponding live broadcast room from the live broadcast server. The live broadcast state is the current live broadcast state of the live broadcast room.

S305: updating the display interface of the resource based on the live broadcast state.

In this embodiment, since different live broadcast states correspond to different display interfaces, after obtaining the live broadcast state, the client updates the display interface of the resource based on the live broadcast state.

In an optional implementation mode, if the live broadcast state is being broadcast live, the elements and effects related to the live broadcast room, such as live broadcast data, etc., may continue to be displayed on the display interface of the resource. If the live broadcast state is live broadcast ending, the elements and effects related to the live broadcast room, such as live broadcast data, etc., may not be displayed on the display interface of the resource.

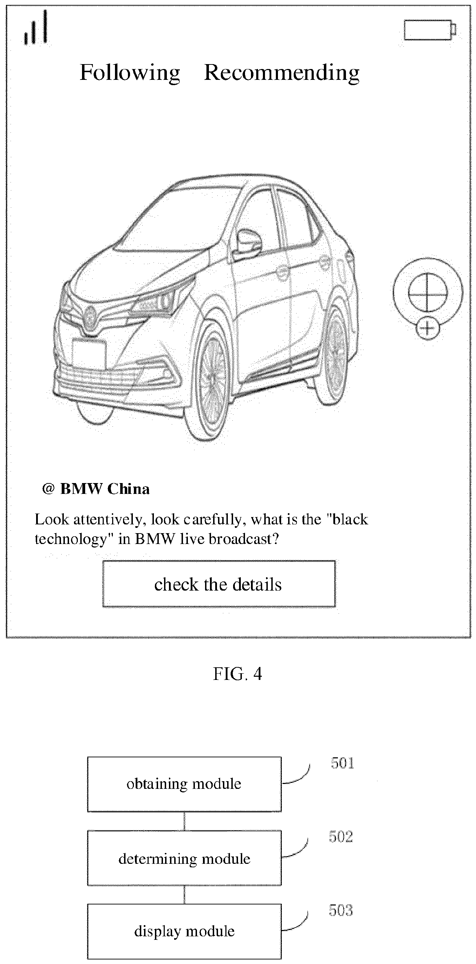

Taking the display interface of the video advertisement illustrated in FIG. 2 above as an example, the display interface in FIG. 2 is the display interface corresponding to that the live broadcast state of the live broadcast room corresponding to the video advertisement is broadcast live. When the client obtains that the live broadcast state of the live broadcast room is live broadcast ending, the elements and effects related to the live broadcast room such as the live broadcast data illustrated in FIG. 2 may not be displayed. FIG. 4 is a schematic diagram of a display interface of another video advertisement provided by the embodiments of the present disclosure. Referring to FIG. 4, specifically, the display interface is a display interface corresponding to that the live broadcast state of the live broadcast room corresponding to the video advertisement is live broadcast ending. As illustrated in FIG. 4, the live broadcast data is not displayed on the display interface of the video advertisement, the breathing light style is not displayed on the avatar, and the button for entering the live broadcast room is not displayed.

In an optional implementation mode, in response to a trigger operation for any live broadcast room entrance on the display interface of the resource, the live broadcast state of the live broadcast room corresponding to the live broadcast room entrance is obtained. If the live broadcast state is live broadcast ending, the mask layer may be displayed on the display interface of the resource, and the mask layer is used to prompt the user that the live broadcast is ended.

In practical applications, when the user triggers the operation of entering the live broadcast room through the live broadcast room entrance on the display interface of the resource, the user may trigger the update of the live broadcast state of the live broadcast room to confirm whether the user is capable of currently entering the live broadcast room. If the live broadcast state of the live broadcast room is live broadcast ending, the user may be prompted by means of a message prompt box or the like that the current live broadcast is ended. Through the above processing, it is possible to avoid reducing the user experience.

It should be noted that, in the present disclosure, in order to distinguish between the "live broadcast state" involved in steps S302-S303 (and steps S102-S103) and the "live broadcast state" involved in steps S304-S305, the "live broadcast state" involved in steps S302-S303 (or steps S102-S103) may be defined as the "first live broadcast state", and the "live broadcast state" involved in steps S304-S305 may be defined as the "second live broadcast state".

In addition, in practical applications, during the display of the resource, the user may trigger a switching operation and a switching back operation for the resource. Specifically, the switching operation for the resource refers to switching from the resource to other resources, while the switching back operation for the resource refers to switching back to this resource from other resources. For example, the user may trigger the switching operation for a certain short video to switch to another short video, and the user may also trigger the switching back operation to switch from other short video back to this short video.

Because when the user triggers the switching back operation for the resource, the live broadcast data needs to be displayed again on the display interface of the resource, in order to reduce the pressure on the server, in the embodiments of the present disclosure, in response to the switching operation for the resource, the currently displayed live broadcast data on the display interface of the resource is recorded, and, in the case of receiving the switching back operation for the resource, the live broadcast data of the live broadcast room is displayed based on the currently displayed live broadcast data that is recorded.

In addition, in an optional implementation mode, there may be at least two live broadcast rooms corresponding to one resource. Therefore, the live broadcast room identifier corresponding to the resource also includes at least two live broadcast room identifiers. Correspondingly, in the method for displaying live broadcast data provided by the embodiments of the present disclosure, in response to a display request for any resource, at least two live broadcast room identifiers corresponding to the resource are obtained. Then the live broadcast states of the live broadcast rooms corresponding to the at least two live broadcast room identifiers are determined, respectively, and the live broadcast data of the live broadcast room, of which the live broadcast state is being broadcast live, is displayed on the display interface of the resource. In addition, the display interface of the resource may also be provided with the entrance of each live broadcast room. In practical applications, the hosts of different live broadcast rooms have their own styles and characteristics, and the user may select the live broadcast room to enter based on the displayed live broadcast data, etc.

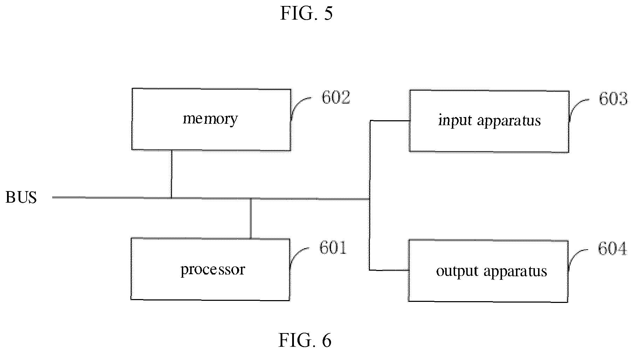

Corresponding to the foregoing method embodiments, the present disclosure further provides an apparatus for displaying live broadcast data. FIG. 5 is a schematic structural diagram of an apparatus for displaying live broadcast data provided by the embodiments of the present disclosure. Referring to FIG. 5, the apparatus for displaying live broadcast data includes:
an obtaining module 501, configured to obtain the live broadcast room identifier corresponding to the resource in response to the display request for the resource;
a determining module 502, configured to determine the first live broadcast state of the live broadcast room corresponding to the live broadcast room identifier; and
a display module 503, configured to display the live broadcast data of the live broadcast room on the display interface of the resource in the case where the first live broadcast state is being broadcast live.

In an optional implementation mode, the display module 503 is specifically used for:
displaying the live broadcast data of the live broadcast room by using the preset live broadcast component on the display interface of the resource, where the preset live broadcast component is used to trigger entering into the live broadcast room.

In an optional implementation mode, the live broadcast data includes the amount of live broadcast viewers, the amount of live broadcast comments, and/or the amount of live broadcast gifts. The apparatus further includes:
an increasing module, configured to dynamically displaying, in an incremental way, the amount of live broadcast viewers, the amount of live broadcast comments, and/or the amount of live broadcast gifts in a preset period.

In an optional implementation mode, the display module 503 includes:
in the case where at least one piece of live broadcast data selected from a group consisting of the amount of live broadcast viewers, the amount of live broadcast comments, and the amount of live broadcast gifts reaches a corresponding preset amount, displaying the at least one piece of live broadcast data.

In an optional implementation mode, the apparatus further includes:
a first display module, configured to display the button for entering the live broadcast room on the display interface of the resource in the case where the first live broadcast state is being broadcast live, where the button for entering the live broadcast room is used to indicate and trigger entering the live broadcast room.

In an optional implementation mode, the apparatus further includes:
a second display module, configured to display the avatar corresponding to the resource in a preset breathing light style in the case where the first live broadcast state is being broadcast live, where the preset breathing light style is used to prompt that the live broadcast state of the live broadcast room is being broadcast live.

In an optional implementation mode, the apparatus further includes:
a triggering module, configured to enter the live broadcast room in response to a trigger operation on the description information, the comment section, the personal homepage preset area, the mask layer or the avatar corresponding to the resource.

In an optional implementation mode, the apparatus further includes:
a first obtaining module, configured to obtain the second live broadcast state of the live broadcast room corresponding to the resource in response to the live broadcast room state updating request for the resource;
an update module, configured to update the display interface of the resource based on the second live broadcast state.

In an optional implementation mode, obtaining the second live broadcast state of the live broadcast room corresponding to the resource in response to the live broadcast room state updating request for the resource includes:
in response to the trigger operation for any live broadcast room entrance on the display interface of the resource, obtaining the second live broadcast state of the live broadcast room corresponding to the live broadcast room entrance.

Correspondingly, the update module is specifically used for:
in the case where the second live broadcast state is live broadcast ending, displaying the mask layer on the display interface of the resource, and the mask layer being used to prompt a user that the live broadcast is ended.

In an optional implementation mode, the apparatus further includes:
a recording module, configured to record the currently displayed live broadcast data on the display interface of the resource in response to a switching operation for the resource.

Correspondingly, the display module 503 is further configured to display the live broadcast data of the live broadcast room based on the currently displayed live broadcast data that is recorded in the case of receiving a switching back operation for the resource.

In an optional implementation mode, the live broadcast room identifier corresponding to the resource includes at least two live broadcast room identifiers, and the display module is specifically used for:
displaying live broadcast data of live broadcast rooms corresponding to the at least two live broadcast room identifiers respectively on the display interface of the resource.

The above-described modules may be implemented as software components executed on one or more general-purpose processors, or as hardware, such as programmable logic devices and/or specific integrated circuits, that perform certain functions or combinations thereof. In some embodiments, these modules may be embodied in the form of a software product, which may be stored in non-volatile storage media including instructions that enable computing devices (e.g., personal computers, servers, network devices, mobile terminals, etc.) to implement the methods described in the embodiments of the present disclosure. In one embodiment, the above-mentioned modules may also be implemented on a single device, or may be distributed on a plurality of devices. The functions of these modules may be combined with each other or further split into a plurality of sub-modules.

In addition, the embodiments of the present disclosure further provide a device for displaying live broadcast data, and FIG. 6 is a schematic structural diagram of a device for displaying live broadcast data provided by the embodiments of the present disclosure. Referring to FIG. 6, the device for displaying live broadcast data may include: a processor 601, a memory 602, an input apparatus 603 and an output apparatus 604. The amount of processors 601 in the device for displaying live broadcast data may be one or more, and one processor is used as an example in FIG. 6. In some embodiments of the present disclosure, the processor 601, the memory 602, the input apparatus 603 and the output apparatus 604 may be connected through a bus or in other ways, and the connection through a bus is taken as an example in FIG. 6.

The memory 602 may be used to store software programs and modules, and the processor 601 executes various functional applications and data processing of the device for displaying live broadcast data by running the software programs and modules stored in the memory 602. The memory 602 may mainly include a stored program section and a stored data section, the stored program section may store an operating system, an application program required for at least one function, and the like. Additionally, the memory 602 may include high-speed random-access memory, and may also include non-volatile memory, such as at least one magnetic disk storage device, flash memory device, or other volatile solid state storage device. The input apparatus 603 may be used to receive input numerical or character information, and to generate signal input related to user settings and function control of the device for displaying live broadcast data. For example, the output apparatus 604 may be used to display the aforementioned display interface and the like.

Specifically in the present embodiments, the processor 601 loads the executable files corresponding to the processes of one or more application programs into the memory 602 according to the instructions, and the processor 601 runs the application programs stored in the memory 602, so as to realize various functions of the above-mentioned device for displaying live broadcast data, for example, realize various functions in the above-mentioned method for displaying live broadcast data.

The embodiments of the present disclosure also provide a computer-readable storage medium. For example, the computer-readable storage medium stores instructions. When the instructions are executed on a terminal device, the terminal device is capable of executing the foregoing method for displaying live broadcast data. For example, the instruction may be an instruction for implementing one or more steps in the aforementioned method for displaying live broadcast data.

The computer-readable storage medium may be contained in the above-mentioned display device, for example, may be implemented as the memory 602 in the above-mentioned display device. The computer-readable storage medium may also exist separately and not be incorporated into the electronic device.

For example, the computer-readable storage medium may include a storage component of a tablet computer, a hard disk of a personal computer, random access memory (RAM), read only memory (ROM), erasable programmable read only memory (EPROM), compact disk read only memory (CD-ROM), flash memory, or any combination of the above storage media, and may also be other suitable storage media.

It should be noted that, in this document, relational terms such as "first" and "second" etc. are only used to distinguish one entity or operation from another entity or operation, and do not necessarily require or imply any such actual relationship or order between these entities or operations. Moreover, the terms "comprising", "including" or any other variation thereof are intended to encompass a non-exclusive inclusion, such that the process, method, item or device including a series of elements not only includes those elements, but also includes other elements not explicitly listed, or also includes elements inherent to such a process, method, item or device. Without further limitation, an element qualified by the phrase "including a..." does not preclude the presence of additional identical elements in a process, method, item or device that includes the element.

The above descriptions are only specific embodiments of the present disclosure, so that those skilled in the art are capable of understanding or implement the present disclosure. Various modifications to these embodiments are readily apparent to those skilled in the art, and the generic principles defined herein may be implemented in other embodiments without departing from the spirit or scope of the present disclosure. Therefore, the present disclosure is not intended to be limited to the embodiments described herein, but to be accorded the widest scope consistent with the principles and novel features disclosed herein.

## Claims

1. A method for displaying live broadcast data, comprising:
in response to a display request for a resource, obtaining a live broadcast room identifier corresponding to the resource;
determining a first live broadcast state of a live broadcast room corresponding to the live broadcast room identifier; and
in a case where the first live broadcast state is being broadcast live, displaying the live broadcast data of the live broadcast room on a display interface of the resource.

2. The method according to claim 1, wherein displaying the live broadcast data of the live broadcast room on the display interface of the resource comprises:
displaying the live broadcast data of the live broadcast room by using a preset live broadcast component on the display interface of the resource, wherein the preset live broadcast component is used to trigger entering into the live broadcast room.

3. The method according to claim 1 or 2, wherein the live broadcast data comprises at least one selected from a group consisting of an amount of live broadcast viewers, an amount of live broadcast comments, and an amount of live broadcast gifts; and
displaying the live broadcast data of the live broadcast room comprises:
dynamically displaying, in an incremental way, at least one selected from the group consisting of the amount of the live broadcast viewers, the amount of the live broadcast comments, and the amount of the live broadcast gifts in a preset period.

4. The method according to claim 3, wherein displaying the live broadcast data of the live broadcast room comprises:
in a case where at least one piece of the live broadcast data selected from the group consisting of the amount of the live broadcast viewers, the amount of the live broadcast comments, and the amount of the live broadcast gifts reaches a corresponding preset amount, displaying the at least one piece of the live broadcast data.

5. The method according to any one of claims 1-4, further comprising:
in the case where the first live broadcast state is being broadcast live, displaying a button for entering the live broadcast room on the display interface of the resource, wherein the button for entering the live broadcast room is used to indicate and trigger entering the live broadcast room.

6. The method according to any one of claims 1-5, wherein after displaying the live broadcast data of the live broadcast room on the display interface of the resource, the method further comprises:
obtaining a second live broadcast state of the live broadcast room corresponding to the resource in response to a live broadcast room state updating request for the resource; and
updating the display interface of the resource based on the second live broadcast state.

7. The method according to claim 6, wherein obtaining the second live broadcast state of the live broadcast room corresponding to the resource in response to the live broadcast room state updating request for the resource comprises:
in response to a trigger operation for any live broadcast room entrance on the display interface of the resource, obtaining the second live broadcast state of the live broadcast room corresponding to the live broadcast room entrance;
updating the display interface of the resource based on the second live broadcast state comprises:
in a case where the second live broadcast state is live broadcast ending, displaying a mask layer on the display interface of the resource, wherein the mask layer is used to prompt a user that the live broadcast is ended.

8. The method according to any one of claims 1-7, further comprising:
in response to a switching operation for the resource, recording currently displayed live broadcast data on the display interface of the resource; and
in a case of receiving a switching back operation for the resource, displaying the live broadcast data of the live broadcast room based on the currently displayed live broadcast data that is recorded.

9. The method according to any one of claims 1-8, wherein the live broadcast room identifier corresponding to the resource comprises at least two live broadcast room identifiers, and displaying the live broadcast data of the live broadcast room on the display interface of the resource comprises:
displaying live broadcast data of live broadcast rooms corresponding to the at least two live broadcast room identifiers on the display interface of the resource, respectively.

10. An apparatus for displaying live broadcast data, comprising:
an obtaining module, configured to obtain a live broadcast room identifier corresponding to a resource in response to a display request for the resource;
a determining module, configured to determine a first live broadcast state of a live broadcast room corresponding to the live broadcast room identifier; and
a display module, configured to display the live broadcast data of the live broadcast room on a display interface of the resource in a case where the first live broadcast state is being broadcast live.

11. A computer-readable storage medium, on which instructions are stored, wherein the instructions, when executed on a terminal device, enable the terminal device to execute the method according to any one of claims 1-9.

12. A device, comprising a memory, a processor, and a computer program stored on the memory, wherein the processor, when executing the computer program, executes the method according to any one of claims 1-9.
